# EUROPÄISCHE PATENTSCHRIFT

(11) **EP 1 625 816 B1**
(45) Veröffentlichungstag und Bekanntmachung des Hinweises auf die Patenterteilung: **13.12.2006**
(21) Anmeldenummer: 05012832.1
(22) Anmeldetag: 15.06.2005
(51) Int. Cl.: A47J 37/01, F24C 15/16

(54) **Koch-, Brat- oder Backgerät, insbesondere Backblech**
Cook-, rost-, or backing device, especially a baking tray
Appareil de cuisson, à griller ou pour cuire, en particulier un plateau de cuisson

(30) Priorität: 13.08.2004 DE 102004039257
(43) Veröffentlichungstag der Anmeldung: 15.02.2006
(73) Patentinhaber: Electrolux Home Products Corporation N.V., 1930 Zaventem (BE)
(72) Erfinder: Arnold, Reiner, 91610 Insingen (DE); Dänzer, Stefan, 91631 Wettringen (DE)
(74) Vertreter: Hochmuth, Jürgen

(56) Entgegenhaltungen:
- EP-A- 1 030 118
- FR-A- 2 645 406
- US-A1- 2004 112 903
- US-A1- 2004 154 475
- US-A1- 2005 087 077

## Beschreibung

Die Erfindung betrifft ein Koch-, Brat- oder Backgerät, insbesondere ein Backblech, das eine Koch-, Brat- oder Backfläche mit seitlichen Rändern aufweist, die im von der Koch-, Brat- oder Backfläche nach außen gewandten Bereich einen zumindest teilweise parallel zur Koch-, Brat- oder Backfläche verlaufenden Griffabschnitt aufweisen.

Backbleche dieser Art sind im Stand der Technik hinlänglich bekannt, siehe z.B. der Druckschrift US 2004/0154475. In FIG 1 und FIG 2 sind Schnitte durch ein solches Blech dargestellt, aus denen hervorgeht, wie das Blech geformt ist. Das Backblech 1 weist eine Backfläche 2 auf, die bei Benutzung des Blechs im wesentlichen horizontal angeordnet ist. Bezugnehmend auf diese Ausrichtung des Blechs 1 hat es seitliche Ränder, die eine fast vertikal angeordnete Wand 12 aufweisen, die im nach außen gerichteten Teil des Randes in einen Griffabschnitt 7 übergeht, der zumindest einen Abschnitt hat, der im wesentlichen parallel zur Backfläche 2 angeordnet ist.

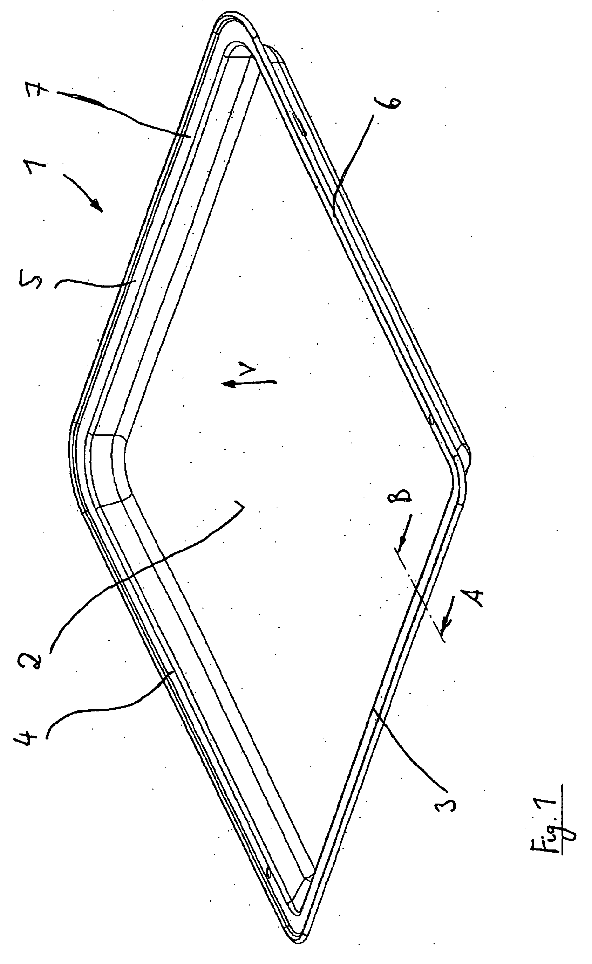

Die vorbekannten Backbleche weisen also eine Randgestaltung auf, die eine flache Randfläche haben, nämlich den Griffabschnitt 7, der meist in einen eingerollten Endabschnitt übergeht, wie es auch in den Figuren 1 und 2 zu sehen ist. Dies hat den Vorteil, dass speziell bei der Verwendung von vorbeschichtetem Material die Endkante 13 des Blechs 1 nach innen eingerollt und somit verdeckt ist. Da die Endkante 13 zumeist erhöhter Korrosion ausgesetzt ist, kann diese durch die dargestellte Gestaltung weitgehend verdeckt werden. Weiterhin haben die vorbekannten und in den Figuren 1 und 2 dargestellten Backbleche eine gute und angenehme Griffigkeit.

Allerdings weisen die vorbekannten Backbleche auch Nachteile auf:

Durch die flache Oberseite, also durch den Griffabschnitt 7, ist zwar eine reinigungsfreundliche Fläche vorhanden, diese ist jedoch bei der Handhabung insbesondere eines hei-βen Blechs, eher nachteilig. Bei der Benutzung von Topflappen oder dgl. ist keine Fixierung für den Daumen auf dem Griffabschnitt 7 vorhanden, so dass es zu einem Abrutschen des Blechs aus der Hand kommen kann.

Ferner ist durch den nach unten eingerollten Rand die freie Fläche zwischen der Endkante 13 und der Wand 12 sehr begrenzt. Dies führt dazu, dass eine sichere Unterstützung beim Greifen des Bleches nicht immer gegeben ist, da dies die zu kleine Fläche nicht ermöglicht.

Bei nicht hinreichend eingerollten Endbereichen besteht weiterhin die Gefahr, dass es im Falle von Emailabzehrungen insbesondere an der Endkante 13 zu Verletzungen der Finger kommen kann.

Schließlich ergeben sich durch die Einrollungen auch Kantenbereiche, an denen sich leicht Schmutz ablagern kann.

Der Erfindung liegt daher die Aufgabe zugrunde, ein Koch-, Brat- oder Backgerät, insbesondere ein Backblech, der eingangs genannten Art so fortzubilden, dass die genannten Nachteile vermieden werden. Es soll also ein Backblech geschaffen werden, das insbesondere eine verbesserte Griffigkeit aufweist, vor allem, wenn es mit Topflappen gehandhabt werden muss. Auch die zur Verfügung stehende Fläche an der Unterseite des Griffabschnitts soll hinreichend groß sein. Schließlich soll die Verletzungsgefahr an der Endkante des Blechs ausgeschaltet sein.

Die Lösung dieser Aufgabe durch die Erfindung ist dadurch gekennzeichnet, dass der Griffabschnitt des Blechs im von der Koch-, Brat- oder Backfläche nach außen gewandten Endbereich einen sich bezüglich der Koch-, Brat- oder Backfläche nach oben erstreckenden Randabschnitt aufweist.

Der erfindungsgemäß sich nach oben erstreckende Randabschnitt erlaubt ein sichereres Halten des Blechs, wodurch die Gefahr des Abrutschens mit den Fingern und insbesondere mit dem Daumen reduziert ist.

Die Koch-, Brat- oder Backfläche ist dabei zumeist eben ausgebildet und kann Bodenprägungen enthalten.

Eine besonders angenehme Handhabung des Blechs wird erreicht, wenn weiterbildungsgemäß der Randabschnitt eine im Querschnitt gerundete Form aufweist. Hierunter ist das an sich bekannte Einrollen des Randabschnitts zu verstehen. Die gerundete Form ist dabei bevorzugt kreisrund ausgebildet. Die Verletzungsgefahr am Blechrand insbesondere bei der Beschädigung der Emailschicht wird dadurch herabgesetzt, wenn die gerundete Form zumindest weitgehend geschlossen ist. Die gerundete Form wird dabei bevorzugt durch ein entsprechend gebogenes Blech gebildet.

Die Griffigkeit des Blechs wird dadurch weiter verbessert, wenn das - in vertikale Richtung betrachtet - unterste Ende der gerundeten Form des Randabschnitts etwa auf Höhe der Unterseite des Griffabschnitts liegt. Hierdurch wird eine relativ große Auflage- und Grifffläche an der Unterseite des Griffabschnitts geschaffen.

Die Erstreckung des Randabschnitts über den Griffabschnitt in vertikale Richtung beträgt vorzugsweise zwischen 5 % und 20 % der vertikalen Erstreckung des Griffabschnitts über der Koch-, Brat- oder Backfläche. Die Breite des Randabschnitts in Richtung senkrecht zur Vertikalen beträgt mit Vorteil zwischen 20 % und 50 % der Breite des Griffabschnitts.

Das Koch-, Brat- oder Backgerät besteht vorzugsweise aus Metall, insbesondere aus Aluminium oder aluminiertem Material. Es kann mit einer Schicht versehen sein, die ein geringes Anhaftvermögen von Koch-, Brat- oder Backstoffen aufweist. Als Beschichtungsmaterial kommt dabei vor allem Polytetraflourethylen (PTFE) in Frage, das unter der Handelsbezeichnung TEFLON bekannt ist. Bewährt hat sich auch die Aufbringung einer Email-Schicht auf das Blech.

Mit dem erfindungsgemäßen Vorschlag wird ein Backblech geschaffen, das durch die Bördelung nach oben eine verbesserte Griffigkeit aufweist. Gleichzeitig wird eine Flächenvergrößerung auf der Unterseite des Griffabschnitts erreicht. Die Endkante des Blechs ist optimal verdeckt, so dass sowohl das optische Erscheinungsbild des Blechs bei Emailabzehrungen gut bleibt als auch die Verletzungsgefahr hierdurch minimiert ist.

In der Zeichnung ist ein Ausführungsbeispiel der Erfindung dargestellt. Es zeigen:
- FIG 1: schematisch in perspektivischer Ansicht eine Ausführungsform des erfindungsgemäßen Backblechs,
- FIG 2: den Schnitt A-B gemäß FIG 1 für eine erste Ausführungsform gemäß dem Stand der Technik,
- FIG 3: den Schnitt A-B gemäß FIG 1 für eine zweite Ausführungsform gemäß dem Stand der Technik und
- FIG 4: den Schnitt A-B gemäß FIG 1 für die in FIG 1 dargestellte Ausführungsform des erfindungsgemäßen Backblechs.

In FIG 1 ist ein Backblech 1 perspektivisch dargestellt, das eine Backfläche 2 aufweist, die von seitlichen Rändern 3, 4, 5 und 6 begrenzt wird. Die seitlichen Ränder 3, 4, 5, 6 ragen fast senkrecht von der ebenen Backfläche 2 nach oben und gehen in ihrem oberen Endbereich in einen zur Backfläche 2 parallelen Griffabschnitt 7 über. Im Gebrauch ist die Backfläche 2 im wesentlichen horizontal angeordnet; die sich daraus ergebende Richtung der Vertikalen ist mit V bezeichnet.

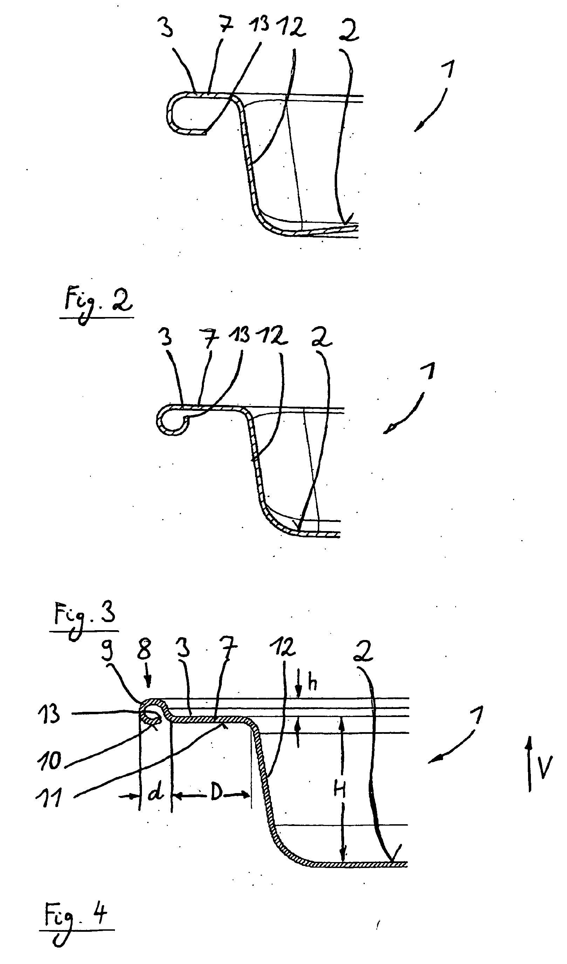

Details der Ausführung des Rands 3, 4, 5, 6 gehen aus FIG 4 hervor, die den Schnitt A-B gemäß FIG 1 durch das Blech 1 darstellt.

Ausgehend von der Bäckfläche 2 erstreckt sich - wie bereits erwähnt - der Rand 3, 4, 5, 6 und namentlich die Wand 12 des Backblechs 1 fast senkrecht nach oben; im Ausführungsbeispiel beträgt der Winkel der Wand 12 ca. 80° zur Ebene der Backfläche 2. Im oberen Bereich geht das Blech 1 in den Griffabschnitt 7 über, der weitgehend parallel zur Backfläche 2 ausgerichtet ist, also horizontal verläuft. Im Endbereich 8 des Griffabschnitts 7 ist ein Randabschnitt 9 angeordnet, der sich weiter in Vertikalrichtung V nach oben erstreckt. Der Griffabschnitt 7 weist also im von der Backfläche 2 nach außen gewandten Endbereich 8 den sich bezüglich der Backfläche 2 nach oben erstreckenden Randabschnitt 9 auf.

Wie aus FIG 4 ersichtlich ist, ist der Randabschnitt 9 kreisrund aus dem Blech gerollt und im Bereich der Endkante 13 fast geschlossen ausgebildet, so dass sich keine Kante bildet, die Schnittverletzungen hervorrufen könnte.

Dabei ist der Randabschnitt 9 so geformt, dass das untere Ende 10 des Randabschnitts 9 etwa auf derselben Höhe zu liegen kommt wie die Unterseite 11 des Griffabschnitts 7.

FIG 4 gibt auch über die Größenverhältnisse Auskunft, die das Backblech 1 bevorzugt aufweist:

Die vertikale Erstreckung h des Randabschnitts 9 über den Griffabschnitt 7 liegt etwa zwischen 5 % und 20 % der vertikalen Erstreckung H des Griffabschnitts 7 über der Backfläche 2. Die Breite d des Randabschnitts 9 in Richtung senkrecht zur Vertikalen V liegt dabei etwa zwischen 20 % und 50 % der Breite D des Griffabschnitts 7.

Das Blech 1 inklusive des gerundeten bzw. gerollten Randabschnitts 9 lässt sich in einfacher Weise durch einen Tiefzieh- bzw. Umformprozess herstellen, wozu die bekannten Techniken eingesetzt werden können.

Das Blech 1 besteht dabei zumeist aus Metall, das mit einer geeigneten Schicht versehen ist, um es für den täglichen Gebrauch verwendbar zu machen. Dabei wird zumeist eine E-mail-Beschichtung vorgesehen werden.

In Frage kommt aber auch eine Beschichtung mit Polytetraflourethylen (PTFE), was eine leichte Lösbarkeit von Schutz sicherstellt.

Das erfindungsgemäße Blech weist durch seine Bördelung nach oben eine verbesserte Griffigkeit sowie eine für das Greifen günstige Flächenvergrößerung an der Unterseite des Griffabschnitts auf. Es ergibt sich eine verbesserte Haptik.

### Bezugszeichenliste

- 1: Koch-, Brat- oder Backgerät (Backblech)
- 2: Koch-, Brat- oder Backfläche
- 3: seitlicher Rand
- 4: seitlicher Rand
- 5: seitlicher Rand
- 6: seitlicher Rand
- 7: Griffabschnitt
- 8: Endbereich des Griffabschnitts
- 9: Randabschnitt
- 10: unteres Ende des Randabschnitts
- 11: Unterseite des Griffabschnitts
- 12: Wand
- 13: Endkante

- V: vertikale Richtung
- h: Erstreckung des Randabschnitts über den Griffabschnitt
- H: vertikalen Erstreckung des Griffabschnitts über der Koch-, Brat- oder Backfläche
- d: Breite des Randabschnitts
- D: Breite des Griffabschnitts

## Patentansprüche

1. Koch-, Brat- oder Backgerät, insbesondere Backblech (1), das eine Koch-, Brat- oder Backfläche (2) mit seitlichen Rändern (3, 4, 5, 6) aufweist, die im von der Koch-, Brat- oder Backfläche (2) nach außen gewandten Bereich einen zumindest teilweise parallel zur Koch-, Brat- oder Backfläche (2) verlaufenden Griffabschnitt (7)' aufweisen,
**dadurch gekennzeichnet,**
**dass** der Griffabschnitt (7) im von der Koch-, Brat- oder Backfläche (2) nach außen gewandten Endbereich (8) einen sich bezüglich der Koch-, Brat- oder Backfläche (2) nach oben (V) erstreckenden Randabschnitt (9) aufweist.

2. Koch-, Brat- oder Backgerät nach Anspruch 1, **dadurch gekennzeichnet, dass** die Koch-, Brat- oder Backfläche (2) eben ausgebildet ist.

3. Koch-, Brat- oder Backgerät nach Anspruch 1 oder 2, **dadurch gekennzeichnet, dass** der Randabschnitt (9) eine im Querschnitt gerundete Form aufweist.

4. Koch-, Brat- oder Backgerät nach Anspruch 3, **dadurch gekennzeichnet, dass** die gerundete Form kreisrund ist.

5. Koch-, Brat- oder Backgerät nach Anspruch 3 oder 4, **dadurch gekennzeichnet, dass** die gerundete Form zumindest weitgehend geschlossen ist.

6. Koch-, Brat- oder Backgerät nach einem der Ansprüche 3 bis 5, **dadurch gekennzeichnet, dass** die gerundete Form durch ein entsprechend gebogenes Blech gebildet wird.

7. Koch-, Brat- oder Backgerät nach einem der Ansprüche 3 bis 6, **dadurch gekennzeichnet, dass** das in vertikale Richtung (V) unterste Ende (10) der gerundeten Form des Randabschnitts (9) etwa auf Höhe der Unterseite (11) des Griffabschnitts (7) liegt.

8. Koch-, Brat- oder Backgerät nach einem der Ansprüche 1 bis 7, **dadurch gekennzeichnet, dass** die Erstreckung (h) des Randabschnitts (9) über den Griffabschnitt (7) in vertikale Richtung (V) zwischen 5 % und 20 % der vertikalen Erstreckung (H) des Griffabschnitts (7) über der Koch-, Brat- oder Backfläche (2) beträgt.

9. Koch-, Brat- oder Backgerät nach einem der Ansprüche 1 bis 8, **dadurch gekennzeichnet, dass** die Breite (d) des Randabschnitts (9) in Richtung senkrecht zur Vertikalen (V) zwischen 20 % und 50 % der Breite (D) des Griffabschnitts (7) beträgt.

10. Koch-, Brat- oder Backgerät nach einem der Ansprüche 1 bis 9, **dadurch gekennzeichnet, dass** es aus Metall besteht.

11. Koch-, Brat- oder Backgerät nach Anspruch 10, **dadurch gekennzeichnet, dass** es mit einer Schicht versehen ist, die ein geringes Anhaftvermögen von Koch-, Brat- oder Backstoffen aufweist, insbesondere aus Polytetraflourethylen (PTFE).

12. Koch-, Brat- oder Backgerät nach Anspruch 10, **dadurch gekennzeichnet, dass** es mit einer Email-Schicht versehen ist.

## Claims

1. Cooking, roasting or baking apparatus, in particular baking tray (1), which has a cooking, roasting or baking surface (2) with side edges (3, 4, 5, 6), which have a gripping section (7) running at least partly parallel to the cooking, roasting or baking surface (2) in the region facing outwards from the cooking, roasting or baking surface (2), **characterised in that** the gripping section (7) has an edge section (9) extending upwards (V) with respect to the cooking, roasting or baking surface (2) in the end region (8) facing outwards from the cooking, roasting or baking surface (2).

2. Cooking, roasting or baking apparatus according to claim 1, **characterised in that** the cooking, roasting or baking surface (2) is designed to be flat.

3. Cooking, roasting or baking apparatus according to claim 1 or 2, **characterised in that** the edge section (9) has a shape which is rounded in cross-section.

4. Cooking, roasting or baking apparatus according to claim 3, **characterised in that** the rounded shape is circular.

5. Cooking, roasting or baking apparatus according to claim 3 or 4, **characterised in that** the rounded shape is at least largely closed.

6. Cooking, roasting or baking apparatus according to one of claims 3 to 5, **characterised in that** the rounded shape is formed by a correspondingly bent tray.

7. Cooking, roasting or baking apparatus according to one of claims 3 to 6, **characterised in that** the lowest end (10) in vertical direction (V) of the rounded shape of the edge section (9) lies approximately at the height of the underside (11) of the gripping section (7).

8. Cooking, roasting or baking apparatus according to one of claims 1 to 7, **characterised in that** the extension (h) of the edge section (9) beyond the gripping section (7) in vertical direction (V) is between 5% and 20% of the vertical extension (H) of the gripping section (7) beyond the cooking, roasting or baking surface (2).

9. Cooking, roasting or baking apparatus according to one of claims 1 to 8, **characterised in that** the width (d) of the edge section (9) in the direction perpendicular to the vertical (V) is between 20% and 50% of the width (D) of the gripping section (7).

10. Cooking, roasting or baking apparatus according to one of claims 1 to 9, **characterised in that** it consists of metal.

11. Cooking, roasting or baking apparatus according to claim 10, **characterised in that** it is provided with a layer which has a low adhesive capacity for cooking, roasting or baking materials, in particular made from polytetrafluoroethylene (PTFE).

12. Cooking, roasting or baking apparatus according to claim 10, **characterised in that** it is provided with an enamel layer.

## Revendications

1. Appareil de cuisson, à griller ou pour cuire, en particulier tôle de patisserie (1), qui présente une face de cuisson, à griller ou pour cuire (2) avec des bords latéraux (3, 4, 5, 6), qui présentent dans la zone dirigée de la face de cuisson, à griller ou pour cuire (2) vers l'extérieur une section de prise (7) s'étendant au moins partiellement parallèlement à la face de cuisson, à griller ou pour cuire (2),
**caractérisé**
**en ce que** la section de prise (7) présente dans la zone d'extrémité (8) dirigée de la face de cuisson, à griller ou pour cuire (2) vers l'extérieur une section de bord (9) s'étendant par rapport à la face de cuisson, à griller ou pour cuire (2) vers le haut (V).

2. Appareil de cuisson, à griller ou pour cuire selon la revendication 1, **caractérisé en ce que** la face de cuisson, à griller ou pour cuire (2) est réalisée plane.

3. Appareil de cuisson, à griller ou pour cuire selon la revendication 1 ou 2, **caractérisé en ce que** la section de bord (9) présente une forme arrondie en section transversale.

4. Appareil de cuisson, à griller ou pour cuire selon la revendication 3, **caractérisé en ce que** la forme arrondie réalise un rond de cercle.

5. Appareil de cuisson, à griller ou pour cuire selon la revendication 3 ou 4, **caractérisé en ce que** la forme arrondie est fermée au moins dans une grande mesure.

6. Appareil de cuisson, à griller ou pour cuire selon l'une des revendications 3 à 5, **caractérisé en ce que** la forme arrondie est formée par une tôle courbée d'une manière correspondante.

7. Appareil de cuisson, à griller ou pour cuire selon l'une des revendications 3 à 6, **caractérisé en ce que** l'extrémité (10), la plus inférieure dans la direction verticale (V), de la forme arrondie de la section de bord (9) se situe à peu près à la hauteur du côté inférieur (11) de la section de prise (7).

8. Appareil de cuisson, à griller ou pour cuire selon l'une des revendications 1 à 7, **caractérisé en ce que** l'extension (h) de la section de bord (9) sur la section de prise (7) dans la direction verticale (V) représente entre 5% et 20% de l'extension verticale (H) de la section de prise (7) sur la face de cuisson, à griller ou pour cuire (2).

9. Appareil de cuisson, à griller ou pour cuire selon l'une des revendications 1 à 8, **caractérisé en ce que** la largeur (d) de la section de bord (9) en direction perpendiculairement à la verticale (V) représente entre 20% et 50% de la largeur (D) de la section de prise (7).

10. Appareil de cuisson, à griller ou pour cuire selon l'une des revendications 1 à 9, **caractérisé en ce qu'**il est réalisé en métal.

11. Appareil de cuisson, à griller ou pour cuire selon la revendication 10, **caractérisé en ce qu'**il est pourvu d'une couche qui présente une faible adhérence de matières de cuisson, à griller ou pour cuire, en particulier en polytétrafluoroéthylène (PTFE).

12. Appareil de cuisson, à griller ou pour cuire selon la revendication 10, **caractérisé en ce qu'**il est pourvu d'une couche d'émail.
